# FASCICULE DE BREVET EUROPEEN

(11) **EP 3 326 717 B1**
(45) Date de publication et mention de la délivrance du brevet: **08.07.2020**
(21) Numéro de dépôt: 17203001.7
(22) Date de dépôt: 22.11.2017
(51) Int. Cl.: B01L 3/00, F04B 43/04, F16K 99/00

(54) **PROCÉDÉ DE FABRICATION D'UN DISPOSITIF MICROFLUIDIQUE ET DISPOSITIF MICROFLUIDIQUE OBTENU PAR LE PROCÉDÉ**
HERSTELLUNGSVERFAHREN EINER MIKROFLUID-VORRICHTUNG, UND ANHAND DIESES VERFAHRENS ERHALTENE MIKROFLUID-VORRICHTUNG
METHOD FOR MANUFACTURING A MICROFLUIDIC DEVICE AND MICROFLUIDIC DEVICE OBTAINED BY THE METHOD

(30) Priorité: 23.11.2016 FR 1661396
(43) Date de publication de la demande: 30.05.2018
(73) Titulaire: COMMISSARIAT À L'ÉNERGIE ATOMIQUE ET AUX ÉNERGIES ALTERNATIVES, 75015 Paris (FR)
(72) Inventeur: FOUILLET, Yves, 38340 VOREPPE (FR); PARENT, Charlotte, 38100 GRENOBLE (FR); VERPLANCK, Nicolas, 38120 SAINT EGREVE (FR)
(74) Mandataire: GIE Innovation Competence Group

(56) Documents cités:
- WO-A1-2010/031559

## Description

### Domaine technique de l'invention

La présente invention se rapporte à un procédé de fabrication d'un dispositif micro-fluidique et à un dispositif micro-fluidique obtenu par le procédé.

### Etat de la technique

Il est connu des documents US2012/064597A1**,** US2013/130262A1**,** US2007/166199A1 et US2006/076068A1 des dispositifs micro-fluidiques formés d'un réseau micro-fluidique de capsules micro-fluidiques et de canaux reliant les capsules entre elles. Chaque capsule micro-fluidique comporte une chambre dans laquelle débouche un canal d'entrée et dont ressort un canal de sortie. Une membrane déformable est commandée entre deux positions pour conférer deux états distincts à la capsule, un premier état dans lequel le canal d'entrée communique avec le canal de sortie via la chambre autorisant un transfert de fluide, et un deuxième état dans lequel la membrane bloque la communication entre les deux canaux, empêchant l'écoulement de fluide et le remplissage de la chambre de la capsule. La commande de la membrane entre ses deux états sera par exemple réalisée à l'aide de moyens pneumatiques, par exemple en exerçant sur elle une pression positive ou une pression négative. Pour réaliser ces dispositifs, les solutions connues sont réalisées par un assemblage multicouche dans lequel la membrane déformable forme une couche intermédiaire prise entre deux cartes. La membrane est souvent collée ou fixée par de l'adhésif double-face prédécoupé. De tels dispositifs micro-fluidiques sont souvent difficiles à assembler car :
- Ils nécessitent de découper l'adhésif d'une manière adaptée pour libérer l'espace réservé aux chambres ;
- Ils nécessitent un positionnement parfait des différentes couches entre elles ;
- La présence de colle rajoute une surépaisseur difficile à contrôler (variation de plusieurs microns voire quelques dizaines de microns) et peut également interagir avec les liquides d'intérêt ;
- La membrane est réalisée sous la forme d'un film mince en silicone qui est perméable à l'air.

La demande de brevet WO2010/031559A1 décrit pour sa part une solution de vanne micro-fluidique. Cette solution n'est cependant pas adaptée à toutes les applications micro-fluidiques. Elle ne permet notamment pas de pomper un fluide dans un dispositif micro-fluidique.

Le but de l'invention est donc de proposer un dispositif micro-fluidique qui s'affranchisse des contraintes d'assemblage de l'état de la technique et qui permette d'être employé pour diverses applications, et un procédé de fabrication d'un tel dispositif micro-fluidique.

### Exposé de l'invention

Ce but est atteint par un procédé de fabrication d'un dispositif micro-fluidique tel que défini en revendication 1.

La demande de brevet WO2010/031559A1 ne décrit notamment pas une solution dans laquelle un élément en matériau déformable est ajouté sous forme liquide dans une cavité à un volume calibré pour créer, une fois à l'état solide, une chambre de volume non nul. Ainsi, la solution présentée dans ce document ne peut répondre à certaines applications dans lesquelles un échantillon liquide peut être pompé vers la chambre puis réinjecté en aval par commutation de la chambre.

D'autres particularités du procédé de fabrication sont définies dans les revendications dépendantes.

Un autre but de l'invention est également de proposer un dispositif micro-fluidique tel que défini en revendication 6.

Des particularités de ce dispositif sont également exposées dans des revendications dépendantes.

### Brève description des figures

D'autres caractéristiques et avantages vont apparaître dans la description détaillée qui suit faite en regard des dessins annexés dans lesquels :
- Les figures 1A et 1B représentent un dispositif micro-fluidique conforme à l'invention, respectivement suivant une première coupe longitudinale verticale et suivant une deuxième coupe longitudinale horizontale.
- Les figures 2A et 2B illustrent une première variante de réalisation d'une capsule micro-fluidique du dispositif de l'invention.
- La figure 3 représente une autre variante de réalisation d'une capsule micro-fluidique d'un dispositif ne faisant pas partie de l'invention.
- La figure 4 représente une autre variante de réalisation d'une capsule micro-fluidique du dispositif de l'invention.
- Les figures 5A et 5B illustrent un principe de fonctionnement d'une capsule micro-fluidique selon l'invention.
- La figure 6 illustre un autre principe de fonctionnement d'une capsule micro-fluidique ne faisant pas partie de 'invention.
- Les figures 7A et 7B illustrent un autre principe de fonctionnement d'une capsule micro-fluidique ne faisant pas partie de l'invention.
- Les figures 8A et 8B illustrent un autre principe de fonctionnement d'une capsule micro-fluidique ne faisant pas partie de l'invention.
- La figure 9 représente les différentes étapes mises en œuvre dans le procédé de fabrication d'un dispositif micro-fluidique de l'invention.
- Les figures 10A et 10B illustrent le principe de fonctionnement d'un dispositif micro-fluidique de l'invention à plusieurs capsules micro-fluidiques.

### Description détaillée d'au moins un mode de réalisation

Dans la suite de la description, les termes "supérieur", "inférieur", "haut", "bas", "dessus", "dessous" ou autres termes équivalents sont à comprendre en prenant comme référence un axe (X) vertical.

Le dispositif micro-fluidique 1 de l'invention sera adapté pour tous types d'application, notamment des applications médicales dans lesquelles un échantillon liquide doit être analysé. Il s'agira par exemple d'un échantillon sanguin auquel il est nécessaire d'ajouter différents réactifs pour être analysé. La solution permet notamment de pomper un échantillon liquide pour le faire passer d'une chambre à une autre.

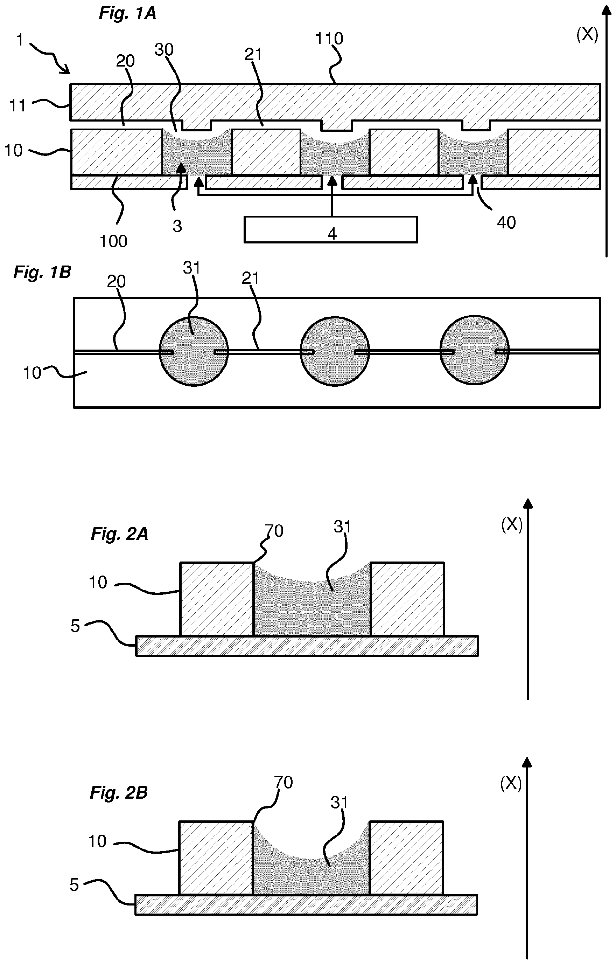

De manière générale, en référence aux figures 1A et 1B, un dispositif micro-fluidique 1 selon l'invention comporte une plaque support comprenant une face supérieure 110, une face inférieure 100 et une tranche formant l'épaisseur de ladite plaque support. La plaque support présente par exemple un format plat de type carte de crédit. Le dispositif micro-fluidique 1 comporte au moins un canal d'entrée 20, au moins un canal de sortie 21 et plusieurs capsules micro- fluidiques 3 destinée à commander le passage d'un fluide F entre ledit canal d'entrée et ledit canal de sortie.

Le dispositif micro-fluidique 1 de l'invention comporte un réseau micro-fluidique comportant plusieurs de ces capsules micro-fluidiques 3 et des canaux micro-fluidiques reliant les capsules entre elles selon différents schémas possibles. Le dispositif 1 comporte notamment plusieurs capsules reliées en série par des canaux.

Selon l'invention, une capsule micro-fluidique 3 employée dans le dispositif de l'invention comporte une chambre 30 de volume modulable réalisée dans la plaque support 10.

La chambre présente un volume modulable défini par la déformation d'un élément 31 en matériau déformable. L'élément 31 est déformable entre au moins deux états pour faire varier le volume interne de la chambre 30 et ainsi commuter la capsule 3. Dans un premier état, il peut autoriser l'écoulement du fluide F dans la chambre 30, la chambre réalisant la liaison entre le canal d'entrée 20 et le canal de sortie 21. Dans un deuxième état, il peut bloquer l'écoulement d'un fluide F dans la chambre, empêchant la circulation de celui-ci entre le canal d'entrée 20 et le canal de sortie 21.

Selon l'invention, l'élément 31 en matériau déformable est logé dans une cavité 7 réalisée dans la plaque support. La plaque support comporte avantageusement au moins une paroi opposée à ladite paroi déformable de manière à délimiter ladite chambre.

Lors de la fabrication, l'élément 31 en matériau déformable est initialement à l'état liquide et versé dans ladite cavité 7 dans une quantité adaptée pour délimiter une paroi déformable, cette paroi définissant un volume non nul pour la chambre 30 à l'état repos et sa forme. Après remplissage et dans son état final, l'élément 31 en matériau déformable obture de manière hermétique l'accès au volume de la chambre par sa face arrière et sa déformation va permettre de moduler la taille de ce volume. L'élément 31 en matériau déformable est ainsi choisi pour présenter un état initial liquide et un état final solide et déformable.

Préférentiellement, l'élément 31 en matériau déformable présente les caractéristiques suivantes :
- A l'état solide, le matériau est élastique, de préférence très étirable, typiquement avec des modules d'élasticité de l'ordre de quelques 100kPa et avec des taux d'élongation élastique maximum de plusieurs centaines de %, typiquement 400-1000% ;
- Une durée de manipulation à l'état liquide égale à au moins une demi-heure pour s'assurer que le matériau ne durcisse pas pendant le remplissage. Ce temps dépend de la quantité de dispositifs à réaliser pour une quantité de matériau donnée et également de la durée du processus de remplissage ;
- Un degré de viscosité à l'état liquide lui permettant de venir remplir la cavité au moins partiellement.

Pour avoir les propriétés définies ci-dessus, l'élément 31 en matériau déformable est par exemple choisi parmi les composants cités ci-dessous :
- Il pourra s'agir d'un matériau bi-composant tel que par exemple un élastomère de type PDMS (pour Polydimethylsiloxane) ou ECOFLEX (marque déposée par la société « Smooth-On ») ;
- Il pourra s'agir d'un matériau polymère de type mousse polyuréthane, mousse silicone, PVC, polystyrène, polyimide, EPDM (Ethylène Propylène) si celui-ci possède des propriétés d'élongation équivalente.

Ci-dessous, un tableau listant différents composants pouvant être employés dans le dispositif et leurs caractéristiques mécaniques :

| **Nom** | **Taux maximum d'élongation** | **Ratio maximum d'élongation** | **Module de Young** | **Coefficient de Poisson** |
|---|---|---|---|---|
| Si | | <1% | 150 GPa | 0,17 |
| Polyimide | | 8% | 2,5 GPa | 0,34 |
| PDMS | 20% | 50% | 0,8-2 GPa | 0,5 |
| Ecoflex | 400% | 1000% | 200 kPa | 0,15 |

Selon l'invention, le volume de la cavité définit un volume à occuper par l'élément 31 en matériau déformable. L'élément 31 en matériau déformable étant initialement sous forme liquide, il est facile d'ajuster son volume versé dans la cavité, par exemple à l'aide d'un dispenseur ou d'une autre solution adaptée. Dans le cas d'une cavité 7 de forme cylindrique, les paramètres importants sont :
- Le volume de la cavité 7 (qui va accueillir l'élément en matériau déformable sous forme liquide),
- Le diamètre de la cavité 7,
- La hauteur de la cavité 7.

Le volume final de la chambre 30 sera ainsi déterminé à partir de la relation suivante : Vchambre = Vcavité - Vliq

Dans laquelle Vliq représente le volume de liquide ajouté dans la cavité pour, au final, réaliser la chambre.

Dans une première variante de réalisation, en fonction du volume de liquide versé, ces paramètres vont définir la forme finale de l'élément en matériau déformable 31 après solidification, et donc la forme de la paroi qui est créée en surface et ainsi le volume de la chambre délimitée en partie par ladite paroi déformable.

Après versement dans la cavité à un volume déterminé, l'élément en matériau déformable 31 sous forme liquide va en effet remonter par capillarité le long des parois de la cavité, par exemple jusqu'à l'arête 70 supérieure de la cavité, conférant à l'élément en matériau déformable, après solidification, une forme déterminée à sa surface (plane concave ou convexe), formant ladite paroi déformable de la chambre, selon les paramètres de la cavité définis ci-dessus. Bien entendu, ce principe se produira pour toute forme de cavité, cylindrique ou non.

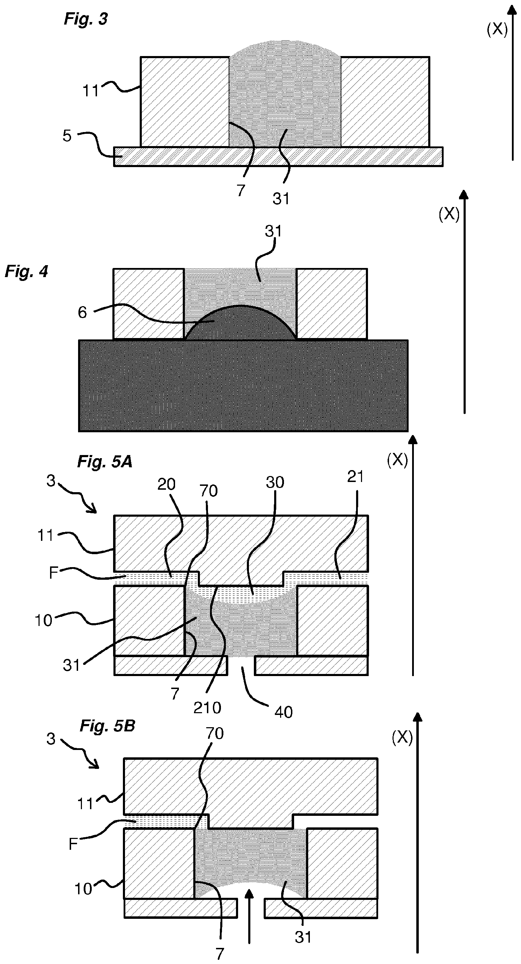

Après le remplissage, l'élément en matériau déformable peut :
- Occuper exactement le volume du trou débouchant (ne faisant pas pasrtie de l'invention),
- Occuper seulement partiellement le volume du trou débouchant (figures 2A et 2B) (selon l'invention), ou
- Occuper un volume plus important que celui du trou débouchant (figure 3) (ne faisant pas partie de l'invention).

En contrôlant le volume d'élément en matériau déformable sous forme liquide injecté dans la cavité, on contrôle la forme de la paroi réalisée en surface et de donc de la calotte (concave, convexe) et le volume creux de la chambre délimitée en partie par ladite paroi, à l'état repos.

Selon le volume injecté dans la cavité et la configuration de la cavité, la surface de l'élément 31 en matériau déformable pourra prendre différentes formes à sa surface (plane, concave-figures 2A et 2B ou convexe-figure 3) conférant à la chambre 30 sa forme au repos. Selon l'invention, la forme est concave.

Afin d'obtenir une géométrie de type calotte concave, il est important que le composant liquide atteigne l'arête 70 de la cavité. Pour s'assurer que le composant liquide atteigne l'arête, il faut verser un minimum de composant liquide. Ce minimum va dépendre de la mouillabilité du liquide avec le support solide. Ensuite, le volume de la chambre dépendra de la quantité de liquide versé. Les figures 2A et 2B permettent d'illustrer ce phénomène. Pour atteindre l'arête 70, la quantité de liquide à verser dans la cavité doit être plus important dans le cas de la figure 2A que dans le cas de la figure 2B. La calotte formée dans le cas de la figure 2A est donc moins prononcée que celle formée dans le cas de la figure 2B. Cependant, il faut noter que dans tous les cas, le liquide prend naturellement la forme d'une calotte demi-sphérique par le phénomène de capillarité. Et c'est cette calotte qui permet de créer la paroi délimitant le volume de la chambre, après solidification.

Sur la figure 3, selon un autre aspect ne faisant pas partie de l'invention, le volume de liquide versé peut aussi dépasser l'arête 70 de la cavité, permettant de créer une calotte convexe. La capsule finale formée sera donc d'une configuration particulière.

Selon une variante de réalisation représentée sur la figure 4, la chambre peut également être formée en employant un moule de forme adaptée. Ainsi, lors de la fabrication et de l'étape de remplissage, un moule 6 amovible peut être positionné à l'intérieur de la cavité. Ce moule 6 amovible est destiné à conférer une forme spécifique à la surface formée par l'élément 31 en matériau déformable, après remplissage. Il pourra s'agir par exemple d'un moule présentant une forme demi-sphérique pour donner à l'élément 31 en matériau déformable sa forme de calotte concave. La forme de la paroi délimitant le volume final de la chambre 3 sera ainsi défini à partir du volume occupé par le moule à l'intérieur de la cavité 7.

Selon l'invention, la plaque support est réalisée sous la forme de trois cartes 10, 11, 12 assemblées l'une sur l'autre. Le dispositif comporte ainsi une première carte 10 disposant de deux faces parallèles, une face supérieure 101 et une face inférieure 100, et d'une tranche formant son épaisseur séparant ses deux faces. Il en est de même de la deuxième carte 11 qui comporte deux faces principales parallèles, c'est-à-dire une face supérieure 110 et une face inférieure 111, et une tranche formant son épaisseur séparant ses deux faces. Les deux cartes seront préférentiellement réalisées dans un même matériau, par exemple en polycarbonate (PC), en Polyméthacrylate de méthyle (PMMA) ou en polymère et copolymère cyclo-oléfine (COP/COC). Les deux cartes ont préférentiellement des contours de dimensions et de forme identiques. Elles seront par exemple au format carte de crédit.

Lors de la fabrication et de l'étape de remplissage par l'élément en matériau déformable, la première carte 10 est avantageusement positionnée sur un support 5 provisoire, sa face inférieure 100 reposant sur ce support plan, ce qui permet de faciliter le remplissage. Ce support est ensuite retiré, après la solidification de l'élément en matériau déformable à l'intérieur de la cavité.

Le support provisoire 5 peut également intégrer le moule 6 permettant de donner sa forme à la chambre (figure 4). Le moule doit également être retiré après réticulation du composé ajouté dans la cavité 7.

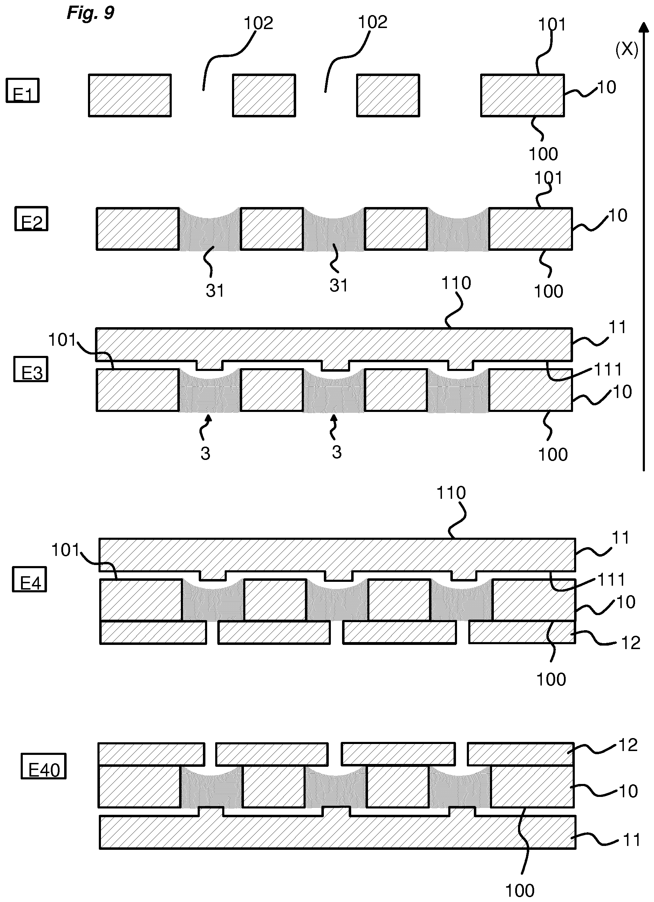

Selon l'invention, chaque capsule micro-fluidique 3 est réalisée de la manière suivante :
- Formation d'un trou 102 à travers la première carte 10. Le trou 102 traverse la carte sur son épaisseur. Il peut être réalisé par toute technique appropriée, notamment par usinage (figure 9 - étape E1) ;
- Utilisation éventuelle d'un activateur de silicone sur la surface du trou afin d'assurer une bonne adhésion du matériau ;
- Remplissage du trou 102 ainsi formé par l'élément 31 en matériau déformable qui est initialement à l'état liquide (figure 9 - étape E2) ;
- Réalisation d'une empreinte sur la surface inférieure de la deuxième carte 11 de manière à former un réseau micro-fluidique, comportant notamment le canal d'entrée et le canal de sortie vers la chambre de chaque capsule ;
- Positionnement et fixation de la deuxième carte 11 sur la première carte 10, de sorte que sa face inférieure vienne en appui sur la face supérieure de la première carte (figure 9 - étape E3). Cette fixation peut par exemple être réalisée par scellement thermique, scellement laser, scellement ultra-sons, sérigraphie, voire par l'utilisation d'un adhésif double face. L'assemblage des deux cartes et le trou forment ainsi les parois de la cavité 7.
- Réalisation d'un réseau de commande de chaque capsule micro-fluidique sur une troisième carte 12 ; Ce réseau de commande peut comporter plusieurs trous d'actionnement 40 ou entrées de commande débouchant chacun au niveau d'une capsule micro-fluidique distincte ;
- Positionnement et fixation de la troisième carte 12 de sorte que sa face supérieure soit appliquée sur la face inférieure de la première carte 10, chaque trou d'actionnement 40 étant situé en vis-à-vis d'une capsule micro-fluidique distincte.

Le trou 102 débouchant réalisé à travers la première carte 10 peut être de forme cylindrique (figures 5A et 5B).

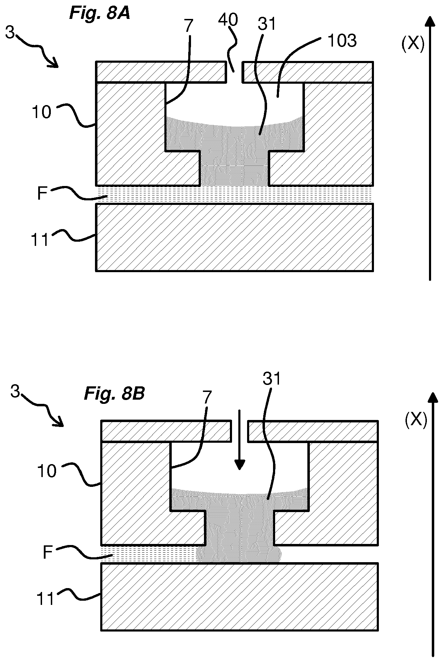

Le trou débouchant 102 peut être formé d'au moins deux cylindres de diamètres différents (figures 8A et 8B). Les deux cylindres peuvent être coaxiaux ou non.

En variante de réalisation ne faisant pas partie de l'invention, la première carte 10 peut être retournée de sorte que chaque chambre 30 formée selon l'un des processus décrits ci-dessus soit située du côté du réseau de commande et non plus du côté du réseau micro-fluidique (étape E40 -figure 9). Dans cette configuration, en reprenant la disposition décrite ci-dessus, on a ainsi la deuxième carte 11 portant le réseau micro-fluidique qui est fixée sur la face inférieure de la première carte 10 et la troisième carte 12 portant le réseau de commande qui est fixée sur la face supérieure de la première carte.

En modifiant la pression au niveau d'une entrée de commande, il est possible de faire commuter la capsule entre ses deux états. La pression appliquée peut être positive, négative et/ou consister en une mise à l'air libre. Dans ce dernier cas, c'est la pression du fluide injecté dans le réseau micro-fluidique qui permettra de déplacer la membrane déformable.

Dans les différentes configurations possibles, il s'agit notamment d'obtenir des capsules 3 de type "normalement fermé" ou de type "normalement ouvert".

Lorsque la chambre 30 est orientée vers le réseau micro-fluidique, elle comporte une entrée fluidique, préférentiellement radiale, communiquant avec le canal d'entrée 20 et une sortie fluidique, préférentiellement radiale, communiquant avec le canal de sortie 21. Son entrée fluidique et sa sortie fluidique communiquent avec le volume de ladite chambre 30.

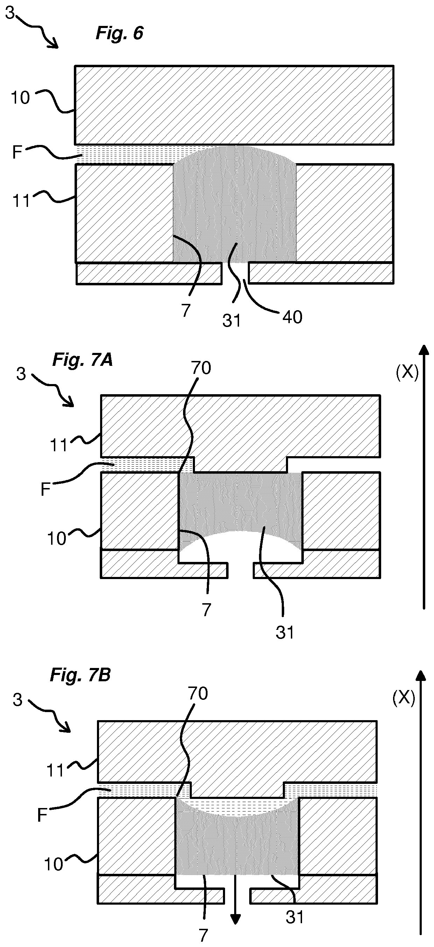

L'empreinte micro-fluidique réalisée sur la surface inférieure de la deuxième carte peut être réalisée selon différentes configurations :
- Le canal d'entrée et le canal de sortie forment entre eux une discontinuité (figures 5A et 5B) ; La discontinuité correspond ainsi à une excroissance ou plot 210 réalisé sur la face inférieure de la deuxième carte, formant le fond de la cavité 7 et venant s'interposer entre le canal d'entrée 20 et le canal de sortie 21.
- Le canal d'entrée et le canal de sortie peuvent être réalisés de manière continue sur la carte, formant un seul canal (figures 6, 7A et7B).

En combinant les différentes caractéristiques définies ci-dessus, il est ainsi possible d'obtenir différentes architectures.

Sur les figures 5A et 5B, une première architecture selon l'invention comporte :
- Un trou 102 de forme cylindrique ;
- Un élément 31 en matériau déformable occupant partiellement le volume du trou débouchant et formant une calotte demi-sphérique concave à sa surface ;
- Un canal d'entrée 20 et un canal de sortie 21 séparés par une discontinuité 210 ;
- L'application d'une pression positive à travers l'entrée de commande permet de faire commuter la capsule de son premier état dans lequel elle autorise l'écoulement du fluide F vers son deuxième état dans lequel elle bloque l'écoulement du fluide F.

Cette première architecture est de type normalement ouvert. Au repos, le volume de la chambre 30 est maximal et l'élément 31 en matériau déformable laisse passer le fluide entre le canal d'entrée et le canal de sortie (figure 5A). Lors de l'actionnement de la capsule (indiquée par la flèche sur la figure 2B), l'élément 31 en matériau déformable se déploie de manière à minimiser le volume de la chambre 30, jusqu'à bloquer le passage du fluide F entre le canal d'entrée 20 et le canal de sortie 21. Elle vient alors en appui contre le plot 210.

Sur les figures 7A et 7B, une deuxième architecture ne faisant pas partie de l'invention comporte :
- Un trou 102 de forme cylindrique ;
- Un élément 31 en matériau déformable occupant partiellement le volume du trou débouchant ;
- Un canal d'entrée 20 et un canal de sortie 21 reliés par un espace de liaison discontinu ;
- Une configuration inversée ; La chambre est ainsi orientée du côté du réseau de commande et non plus du côté du réseau micro-fluidique ;
- L'application d'une pression négative ou la mise à l'air libre de l'entrée de commande permet d'autoriser un écoulement de fluide à travers la capsule.

Sur les figures 8A et 8B, une troisième architecture ne faisant pas partie de l'invention comporte :
- Un trou 103 formé de deux cylindres coaxiaux et formant entre eux un épaulement ;
- Un élément 31 en matériau déformable occupant partiellement le volume du trou débouchant ;
- Un canal d'entrée 20 et un canal de sortie 21 reliés par un espace de liaison continu ;
- Une configuration inversée ; La chambre 30 est ainsi orientée du côté du réseau de commande et non plus du côté du réseau micro-fluidique ;
- L'application d'une pression positive permet de commuter la capsule entre ses deux états.

Cette troisième architecture fonctionne comme une vanne dans laquelle l'élément 31 en matériau déformable joue le rôle de piston. Lorsque la capsule 3 est actionnée, l'élément 31 en matériau déformable se répand dans l'espace de liaison entre les deux canaux.

Sur la figure 6, une quatrième architecture ne faisant pas partie de l'invention comporte :
- Un trou 102 de forme cylindrique ;
- Un élément 31 en matériau déformable occupant plus que le volume du trou débouchant et formant à sa surface une calotte demi-sphérique convexe ;
- Un canal d'entrée et un canal de sortie reliés par un espace de liaison continu ;
- L'application d'une pression négative ou la mise à l'air libre de l'entrée de commande permet de commuter la capsule.

Au repos, l'élément 31 en matériau déformable occupe l'espace de liaison entre les deux canaux, formant une capsule micro-fluidique 3 de type normalement fermé.

Le dispositif micro-fluidique 1 est associé à un système d'actionnement 4 adapté pour agir sur l'élément en matériau déformable de chaque capsule 3 afin de la commuter entre ses deux états. Le système d'actionnement 4 comporte un mécanisme d'actionnement de type pneumatique ou mécanique.

Un tel système d'actionnement 4 comporte une unité de commande et de traitement qui est destinée à mettre en oeuvre une séquence de commande déterminée et le mécanisme d'actionnement qui est destiné à exécuter ladite séquence de commande. La séquence de commande est créée par l'exécution, par l'unité de commande et de traitement UC, d'une pluralité de modules logiciels, chaque module logiciel correspondant à une ou plusieurs des étapes du procédé de commande de l'invention.

Le mécanisme d'actionnement fait avantageusement partie du système d'actionnement 4 de l'invention et est commandé par l'unité de commande et de traitement UC pour déformer l'élément en matériau déformable de chaque capsule, par exemple en exerçant une pression ou une impulsion de pression au moyen d'un fluide de pression, et en particulier d'un gaz de pression via les trous d'actionnement 40 de chaque capsule. Ainsi, le changement d'état d'une capsule micro-fluidique 3 quelconque est réalisé par une modification de la valeur de pression exercée localement sur l'élément en matériau déformable via le trou d'actionnement correspondant de la capsule sélectionnée.

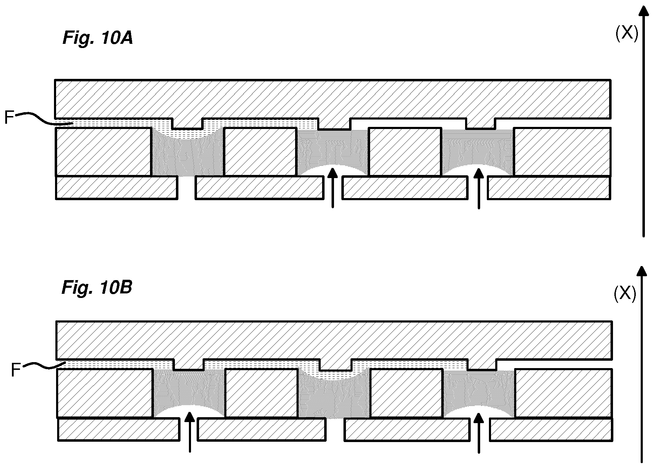

Comme représenté sur les figures 10A et 10B, plusieurs capsules micro-fluidiques sont ains réalisées dans un même dispositif. Celles-ci sont reliées entre elles en série.

Ces figures illustrent le principe de commutation des capsules pour faire passer un fluide d'une capsule à l'autre. Sur ces figures, de manière non limitative, chaque capsule 3 est choisie avec une configuration de type "normalement ouvert", c'est-à-dire qu'en l'absence d'actionnement, elle laisse passer le fluide F d'un canal d'entrée vers un canal de sortie. Sur la figure 10A, la première capsule n'est pas actionnée et toutes les autres sont actionnées. Le fluide occupe donc la chambre de la première capsule et est bloquée par l'état fermé des autres capsules. Sur la figure 10B, la première capsule est actionnée et la deuxième capsule est relâchée. Le fluide F est donc poussé par aspiration de la première capsule vers la deuxième capsule. Le fluide F peut ainsi être transporté d'une capsule à l'autre en commutant en inverse deux capsules successives d'une série.

Le dispositif micro-fluidique 1 de l'invention et son procédé présentent ainsi de nombreux avantages, parmi lesquels :
- Le dispositif est simple à fabriquer car il ne nécessite aucune étape de découpage particulier, ni d'étape de positionnement trop complexe ;
- Le dispositif utilise un système d'actionnement classique, de type mécanique ou pneumatique ;
- Le dispositif peut être fabriqué à l'aide de matériaux conventionnels et peu coûteux.

## Revendications

1. Procédé de fabrication d'un dispositif micro-fluidique (1) comportant un réseau micro-fluidique comprenant plusieurs capsules micro-fluidiques en série, chaque capsule micro-fluidique présentant une chambre ayant un volume interne non nul et qui est agencée pour contrôler l'écoulement d'un fluide entre un canal d'entrée et un canal de sortie du réseau fluidique, chaque capsule micro-fluidique (3) étant réalisée par les étapes suivantes :
- Réalisation d'un trou débouchant (102, 103) à travers une première carte (10) de manière à définir une cavité (7), ladite cavité présentant une entrée débouchant sur une première face de la première carte, dite face supérieure, et une sortie débouchant sur une deuxième face de la première carte ;
- Remplissage au moins partiel de ladite cavité (7) par ajout, par l'entrée de ladite cavité, d'un volume déterminé d'un élément (31) en matériau déformable se présentant initialement sous la forme d'un liquide en vue de délimiter en surface une paroi déformable de ladite chambre et à l'opposé une face arrière d'un réseau de commande de la capsule ;
- Contrôle dudit volume interne de la chambre en calibrant l'élément en matériau déformable ajouté dans la cavité pour déterminer une forme concave de ladite paroi déformable et la profondeur de ladite paroi ;
- Solidification dudit élément (31) en matériau déformable à l'intérieur de la cavité (7) de manière à créer ladite paroi déformable délimitant ladite chambre, et en ce que le procédé comporte également des étapes de :
- Assemblage d'une deuxième carte (11) sur ladite première carte (10), de manière à recouvrir l'entrée de chaque cavité (7), ladite deuxième carte (11) comportant ledit réseau micro-fluidique comprenant ledit canal d'entrée et ledit canal de sortie associés à chaque capsule et agencés pour communiquer avec la chambre de la capsule,
- Assemblage d'une troisième carte (12) sur ladite première carte (10), de manière à recouvrir la sortie de ladite cavité, ladite troisième carte comportant plusieurs trous d'actionnement (40) débouchant chacun au niveau d'une capsule micro-fluidique distincte.

2. Procédé selon la revendication 1, **caractérisé en ce que** ladite paroi de ladite chambre est réalisée uniquement par ajustement du volume d'élément en matériau déformable ajouté sous forme liquide.

3. Procédé selon la revendication 2, **caractérisé en ce qu'**il consiste à remplir ladite cavité jusqu'à une arête (70) de ladite cavité (7), ladite surface de liquide formant une calotte délimitant ladite paroi de ladite chambre.

4. Procédé selon la revendication 3, **caractérisé en ce que** la calotte est de forme concave.

5. Procédé selon la revendication 1, **caractérisé en ce que** ladite chambre (3) est formée par adjonction d'un moule à l'intérieur de ladite cavité (7), la forme du moule (6) étant configurée pour délimiter la forme de ladite paroi de ladite chambre.

6. Dispositif micro-fluidique (1) comportant un réseau micro-fluidique comprenant plusieurs capsules micro-fluidiques en série, chaque capsule micro-fluidique (3) présentant une chambre ayant un volume interne non nul et qui est agencée pour contrôler l'écoulement d'un fluide (F) entre un canal d'entrée et un canal de sortie du réseau micro-fluidique, **caractérisé en ce que** le dispositif est réalisé selon le procédé de fabrication défini dans l'une des revendications 1 à 5, de sorte que la chambre de chaque capsule micro-fluidique (3) est délimitée par une paroi déformable obtenue après remplissage de chaque cavité (7) par ledit élément (31) en matériau déformable.

7. Dispositif selon la revendication 6, **caractérisé en ce que** la première carte (10) et la deuxième carte (11) sont réalisés dans un matériau choisi parmi les matériaux suivants : polymère polycarbonate, PMMA, COC, silicium.

8. Dispositif selon la revendication 6 ou 7, **caractérisé en ce que** la cavité est réalisée par un trou débouchant (102, 103) à travers ladite première carte (10) suivant son épaisseur.

9. Dispositif selon la revendication 8, **caractérisé en ce que** le trou débouchant (102) présente une forme interne cylindrique.

10. Dispositif selon la revendication 8, **caractérisé en ce que** le trou débouchant (103) présente une forme interne à deux cylindres de diamètres distincts.

11. Dispositif selon l'une des revendications 6 à 10, **caractérisé en ce que**, lorsque la capsule n'est pas actionnée, l'élément (31) en matériau déformable occupe partiellement le volume du trou débouchant.

12. Dispositif selon l'une des revendications 6 à 11, **caractérisé en ce que** la deuxième carte (11) comporte une empreinte micro-fluidique creusée sur sa face inférieure et comprenant ledit canal d'entrée (20) et ledit canal de sortie (21) associé à chaque capsule.

13. Dispositif selon l'une des revendications 6 à 12, **caractérisé en ce que** l'élément (31) en matériau déformable comporte un degré de déformation élastique compris entre 400 et 1000%.

14. Dispositif selon la revendication 13, **caractérisé en ce que** l'élément (31) en matériau déformable est formé d'un matériau bi-composant et/ou réticulable.

15. Dispositif selon la revendication 13, **caractérisé en ce que** l'élément (31) en matériau déformable est formé d'un élastomère en silicone.

16. Dispositif selon la revendication 13, **caractérisé en ce que** l'élément (31) en matériau déformable est de type polydiméthylsiloxane (PDMS).

## Patentansprüche

1. Herstellungsverfahren für eine Mikrofluid-Vorrichtung (1), welche ein mikrofluidisches Netz aufweist, das mehrere in Reihe angeordnete mikrofluidische Kapseln umfasst, wobei jede mikrofluidische Kapsel eine Kammer mit einem von null verschiedenen Innenvolumen aufweist und dafür ausgelegt ist, das Fließen eines Fluids zwischen einem Eintrittskanal und einem Austrittskanal des mikrofluidischen Netzes zu steuern, wobei jede mikrofluidische Kapsel (3) durch die folgenden Schritte hergestellt wird:
- Herstellung eines Durchgangslochs (102, 103) durch eine erste Karte (10), um einen Hohlraum (7) zu definieren, wobei der Hohlraum einen Einlass, der auf einer ersten Seite der ersten Karte, Oberseite genannt, mündet, und einen Auslass, der auf einer zweiten Seite der ersten Karte mündet, aufweist;
- wenigstens teilweises Füllen des Hohlraums (7) durch Einleiten, über den Einlass des Hohlraums, eines bestimmten Volumens eines Elements (31) aus verformbarem Material, das ursprünglich in der Form einer Flüssigkeit vorliegt, um an der Oberfläche eine verformbare Wand der Kammer und gegenüber eine Rückseite eines Steuerungsnetzes der Kapsel zu begrenzen;
- Steuerung des Innenvolumens der Kammer durch Kalibrieren des in den Hohlraum eingeleiteten Elements aus verformbarem Material, um eine konkave Form der verformbaren Wand und die Tiefe der Wand zu bestimmen;
- Verfestigung des Elements (31) aus verformbarem Material im Inneren des Hohlraums (7), um die verformbare Wand zu erzeugen, welche die Kammer begrenzt, und dadurch, dass das Verfahren außerdem die Schritte umfasst:
- Montage einer zweiten Karte (11) auf der ersten Karte (10), so dass der Einlass jedes Hohlraums (7) bedeckt wird, wobei die zweite Karte (11) das mikrofluidische Netz aufweist, das den Eintrittskanal und den Austrittskanal umfasst, die jeder Kapsel zugeordnet sind und dafür ausgelegt sind, mit der Kammer der Kapsel zu kommunizieren,
- Montage einer dritten Karte (12) auf der ersten Karte (10), so dass der Auslass des Hohlraums bedeckt wird, wobei die dritte Karte mehrere Betätigungslöcher (40) aufweist, die jeweils an einer anderen mikrofluidischen Kapsel münden.

2. Verfahren nach Anspruch 1, **dadurch gekennzeichnet, dass** die Wand der Kammer ausschließlich durch Anpassung des Volumens des in flüssiger Form eingeleiteten Elements aus verformbarem Material hergestellt wird.

3. Verfahren nach Anspruch 2, **dadurch gekennzeichnet, dass** es darin besteht, den Hohlraum bis zu einer Kante (70) des Hohlraums (7) zu füllen, wobei die Flüssigkeitsoberfläche eine Kappe bildet, welche die Wand der Kammer begrenzt.

4. Verfahren nach Anspruch 3, **dadurch gekennzeichnet, dass** die Kappe eine konkave Form hat.

5. Verfahren nach Anspruch 1, **dadurch gekennzeichnet, dass** die Kammer (3) durch Hinzufügung eines Formwerkzeugs im Inneren des Hohlraums (7) ausgebildet wird, wobei die Form des Formwerkzeugs (6) so gestaltet ist, dass es die Form der Wand der Kammer begrenzt.

6. Mikrofluid-Vorrichtung (1), welche ein mikrofluidisches Netz aufweist, das mehrere in Reihe angeordnete mikrofluidische Kapseln umfasst, wobei jede mikrofluidische Kapsel (3) eine Kammer mit einem von null verschiedenen Innenvolumen aufweist und dafür ausgelegt ist, das Fließen eines Fluids (F) zwischen einem Eintrittskanal und einem Austrittskanal des mikrofluidischen Netzes zu steuern, **dadurch gekennzeichnet, dass** die Vorrichtung gemäß einem Herstellungsverfahren hergestellt ist, welches in einem der Ansprüche 1 bis 5 definiert ist, derart, dass die Kammer jeder mikrofluidischen Kapsel (3) von einer verformbaren Wand begrenzt wird, die nach dem Füllen jedes Hohlraums (7) mit dem Element (31) aus verformbarem Material erhalten wird.

7. Vorrichtung nach Anspruch 6, **dadurch gekennzeichnet, dass** die erste Karte (10) und die zweite Karte (11) aus einem Material hergestellt sind, das aus den folgenden Materialien ausgewählt ist: Polycarbonat-Polymer, PMMA, COC, Silizium.

8. Vorrichtung nach Anspruch 6 oder 7, **dadurch gekennzeichnet, dass** der Hohlraum durch ein Durchgangsloch (102, 103) hergestellt ist, dass die erste Karte (10) in ihrer Dickenrichtung durchquert.

9. Vorrichtung nach Anspruch 8, **dadurch gekennzeichnet, dass** das Durchgangsloch (102) eine zylindrische innere Form aufweist.

10. Vorrichtung nach Anspruch 8, **dadurch gekennzeichnet, dass** das Durchgangsloch (103) eine innere Form von zwei Zylindern mit unterschiedlichen Durchmessern aufweist.

11. Vorrichtung nach einem der Ansprüche 6 bis 10, **dadurch gekennzeichnet, dass**, wenn die Kapsel nicht betätigt ist, das Element (31) aus verformbarem Material das Volumen des Durchgangslochs teilweise einnimmt.

12. Vorrichtung nach einem der Ansprüche 6 bis 11, **dadurch gekennzeichnet, dass** die zweite Karte (11) einen mikrofluidischen Eindruck aufweist, der auf der Unterseite ausgebildet ist und den Eintrittskanal (20) und den Austrittskanal (21) umfasst, die jeder Kapsel zugeordnet sind.

13. Vorrichtung nach einem der Ansprüche 6 bis 12, **dadurch gekennzeichnet, dass** das Element (31) aus verformbarem Material einen elastischen Verformungsgrad zwischen 400 und 1000 % aufweist.

14. Vorrichtung nach Anspruch 13, **dadurch gekennzeichnet, dass** das Element (31) aus verformbarem Material aus einem Zweikomponentenmaterial und/oder vernetzbaren Material ausgebildet ist.

15. Vorrichtung nach Anspruch 13, **dadurch gekennzeichnet, dass** das Element (31) aus verformbarem Material aus einem Silikonelastomer ausgebildet ist.

16. Vorrichtung nach Anspruch 13, **dadurch gekennzeichnet, dass** das Element (31) aus verformbarem Material vom Typ Polydimethylsiloxan (PDMS) ist.

## Claims

1. Method for manufacturing a microfluidic device (1) comprising a microfluidic network comprising several microfluidic capsules in series, each microfluidic capsule having a chamber having a non-zero internal volume and which is arranged to control the flow of a fluid between an inlet channel and an outlet channel of the fluidic network, each microfluidic capsule (3) being produced by the following steps:
- producing a through-hole (102, 103) through a first card (10) so as to define a cavity (7), said cavity having an inlet emerging on a first face of the first card, called top face, and an outlet emerging on a second face of the first card;
- at least partially filling said cavity (7) by the addition, via the inlet of said cavity, of a determined volume of an element (31) made of deformable material initially taking the form of a liquid in order to delimit on the surface a deformable wall of said chamber and, opposite, a rear face of a command network of the capsule;
- controlling said internal volume of the chamber by gauging the element made of deformable material added in the cavity to determine a concave form of said deformable wall and the depth of said wall;
- solidifying said element (31) made of deformable material inside the cavity (7) so as to create said deformable wall delimiting said chamber, and in that the method also comprises steps of:
- assembling a second card (11) on said first card (10), so as to cover the inlet of each cavity (7), said second card (11) comprising said microfluidic network comprising said inlet channel and said outlet channel associated with each capsule and arranged to communicate with the chamber of the capsule,
- assembling a third card (12) on said first card (10), so as to cover the outlet of said cavity, said third card comprising several actuation holes (40) each emerging at a distinct microfluidic capsule.

2. Method according to Claim 1, **characterized in that** said wall of said chamber is produced solely by adjusting the volume of element made of deformable material added in liquid form.

3. Method according to Claim 2, **characterized in that** it consists in filling said cavity to an edge (70) of said cavity (7), said liquid surface forming a cap delimiting said wall of said chamber.

4. Method according to Claim 3, **characterized in that** the cap is of concave form.

5. Method according to Claim 1, **characterized in that** said chamber (3) is formed by the addition of a mould inside said cavity (7), the form of the mould (6) being configured to delimit the form of said wall of said chamber.

6. Microfluidic device (1) comprising a microfluidic network comprising several microfluidic capsules in series, each microfluidic capsule (3) having a chamber having a non-zero internal volume and which is arranged to control the flow of a fluid (F) between an inlet channel and an outlet channel of the microfluidic network, **characterized in that** the device is produced according to the manufacturing method defined in one of Claims 1 to 5, such that the chamber of each microfluidic capsule (3) is delimited by a deformable wall obtained after filling each cavity (7) with said element (31) made of deformable material.

7. Device according to Claim 6, **characterized in that** the first card (10) and the second card (11) are produced in a material chosen from among the following materials: polycarbonate polymer, PMMA, COC, silicon.

8. Device according to Claim 6 or 7, **characterized in that** the cavity is produced by a through-hole (102, 103) thickness-wise through said first card (10).

9. Device according to Claim 8, **characterized in that** the through-hole (102) has a cylindrical internal form.

10. Device according to Claim 8, **characterized in that** the through-hole (103) has an internal form with two cylinders of distinct diameters.

11. Device according to one of Claims 6 to 10, **characterized in that**, when the capsule is not actuated, the element (31) made of deformable material partially occupies the volume of the through-hole.

12. Device according to one of Claims 6 to 11, **characterized in that** the second card (11) comprises a microfluidic imprint hollowed out on its bottom face and comprising said inlet channel (20) and said outlet channel (21) associated with each capsule.

13. Device according to one of Claims 6 to 12, **characterized in that** the element (31) made of deformable material has a degree of elastic deformation of between 400 and 1000%.

14. Device according to Claim 13, **characterized in that** the element (31) made of deformable material is formed by a two-component and/or crosslinkable material.

15. Device according to Claim 13, **characterized in that** the element (31) made of deformable material is formed from a silicone elastomer.

16. Device according to Claim 13, **characterized in that** the element (31) made of deformable material is of polydimethylsiloxane (PDMS) type.
